# EUROPEAN PATENT APPLICATION

(11) **EP 1 288 260 A1**
(43) Date of publication of application: **05.03.2003**
(21) Application number: 01120620.8
(22) Date of filing: 29.08.2001
(51) Int. Cl.: C08L 67/00, C08L 77/00, C08K 13/02, C08K 7/14

(54) **Flame retardant compositions**

(71) Applicant: ALBEMARLE CORPORATION, Baton Rouge, LA 70801-1765 (US)
(72) Inventor: Schryver, Daniel A. De, 2820 Bonheiden (BE)
(74) Representative: UEXKÜLL & STOLBERG

(57) **Abstract**

The compositions comprise moldable blends formed from at least A) a thermoplastic polyester or thermoplastic polyamide polymer; B) glass fiber reinforcement for the polymer; C) at least one halogen-containing flame retardant; D) an antimony oxide and/or alkali metal antimonate flame retardant synergist; and E) a CTI-enhancing combination of (i) at least one acrylic impact modifier, together with at least one of (ii) and (iii) where (ii) is at least one olefin-based hydrocarbon polymer and (iii) is a zinc borate, a mixture of an alkali metal oxide and a boron oxide, an alkaline earth metal borate, and/or a mixture of an alkaline earth metal oxide and a boron oxide or a zinc borate, or both. Additives and masterbatches composed of certain of these components are also described.

## Description

### TECHNICAL FIELD

This invention relates to flame-retardant thermoplastic polyester and thermoplastic polyamide compositions having desirable electrical properties together with other desirable properties, and to flame retardant additive compositions capable of imparting properties of this type to thermoplastic polyester and thermoplastic polyamide polymers.

### BACKGROUND

Thermoplastic polyesters such as polybutylene terephthalate (PBT) and polyethylene terephthalate (PET) and thermoplastic polyamides such as nylon 6, nylon 6,6 and nylon 4,6 and other high temperature nylons, especially when such polyesters or polyamides are glass-filled or otherwise reinforced, are of interest for the production of articles having electrical and electronic applications. Besides flame resistance, electrical resistance is required in order to effectively utilize such polymers in such applications. Unfortunately a shortcoming of many flame-retarded polyester thermoplastics and thermoplastic polyamides is their tendency to allow the passage of electric current over their surface when wet with water. This problem is exacerbated by the presence in the polyester or nylon polymer of glass reinforcement or a bromine-containing flame retardant, and the presence of both glass reinforcement and a bromine-containing flame retardant can make the problem even worse.

A need thus exists for a way of overcoming this deficiency. In particular, it would be of considerable advantage if a way could be found of increasing both the flame retardancy and the comparative tracking index (CTI) of molded polyesters and molded polyamides, including molded polyesters and molded polyamides containing glass reinforcement, CTI being a measure of the resistance of a material to the propagation of arcs (tracks) along its surface under wet conditions. It would be especially desirable if these properties could be achieved when the composition also contains one or more bromine-containing flame retardants while at the same time having finished polymer compositions having a desirable balance of other properties, such as good thermal stability and strength properties.

This invention is deemed to effectively and efficiently enable fulfillment of most ifnot all of the foregoing needs.

### BRIEF SUMMARY OF THE INVENTION

This invention makes it possible to provide glass-filled flame retardant polyester and polyamide thermoplastic polymer compositions having desirable CTI properties as well as a good balance of other properties. Indeed, this invention makes it possible by use of preferred components to produce molded flame retarded articles having desirable properties including a CTI of at least 400 volts, and in some cases CTI values of 500 volts or more. In fact, it has been found possible to provide flame-retarded glass-filled PBT compositions which have desirable properties including CTI values of 600 volts. Such flame-retardant compositions can have good thermal and strength properties as well as such very desirable CTI properties.

Pursuant to one embodiment of this invention there is provided a molding composition formed from components comprising
A) a thermoplastic polyester or thermoplastic polyamide polymer;
B) glass fiber reinforcement for such polymer;
C) at least one halogen-containing flame retardant;
D) an antimony oxide and/or alkali metal antimonate flame retardant synergist; and
E) a CTI-enhancing combination of(i) at least one acrylic impact modifier, together with at least one of (ii) and (iii), and preferably both of (ii) and (iii), (ii) being at least one olefin-based hydrocarbon polymer and (iii) being a zinc borate, a mixture of an alkali metal oxide and a boron oxide, an alkaline earth metal borate, and/or a mixture of an alkaline earth metal oxide and a boron oxide or a zinc borate, or both.

Also provided as another embodiment of this invention are molded or extruded articles or shapes formed from such molding compositions.

A further embodiment is an additive composition that is able to increase the flame retardancy and the comparative tracking index of a glass-filled or glass-reinforced thermoplastic polyester or polyamide, which composition comprises a mixture formed from
a) at least one halogen-containing flame retardant;
b) an antimony oxide and/or alkali metal antimonate flame retardant synergist; and
c) a CTI-enhancing combination of(i) at least one acrylic impact modifier, together with at least one of (ii) and (iii), and preferably both of (ii) and (iii), (ii) being at least one olefin-based hydrocarbon polymer, and (iii) being a zinc borate, a mixture of an alkali metal oxide and a boron oxide, an alkaline earth metal borate, and/or a mixture of an alkaline earth metal oxide and a boron oxide or zinc borate, or both. For ease of reference the components of (iii) are sometimes referred to collectively hereinafter as "boron-based synergists".
Additive compositions of this invention can confer effective flame retardancy upon the glass-reinforced or glass-filled thermoplastic polyesters and polyamides with which the additives are blended, and in addition make it possible to provide enhanced CTI properties, as well as a balance of desirable physical properties.

In preferred embodiments, at least one anti-dripping agent, most preferably a fluoropolymer such as polytetrafluoroethylene, is employed as another component used in forming the molding compositions, the molded or extruded articles or shapes, and the additive compositions of this invention.

Another embodiment of this invention is a method of increasing the flame retardancy and comparative tracking index of a thermoplastic polyester or thermoplastic polyamide, which method comprises blending with the polyester or polyamide suitable amounts of the additive components in accordance with this disclosure. It will be seen that the CTI enhancement achieved pursuant to this invention involves use of materials known as acrylic impact modifiers, along with one or preferably both of (1) at least one olefin-based hydrocarbon polymer, preferably polypropylene, and (2) at least one of the boron-based synergists. Thus these materials are performing a new, additional function in the practice of this invention, that of increasing CTI performance.

Other embodiments and features of this invention will be still further apparent from the ensuing description and appended claims.

### FURTHER DETAILED DESCRIPTION

### Proportions

Typically, the amount of polyester or polyamide resin blended into the polymer compositions of this invention will be in the order of at least 27%, and preferably at least 30 wt% of the total weight of the composition. Also, at least 50%, and preferably at least 55%, of the total weight of the polymer compositions will be composed of one or more polyester or polyamide resins and one or more reinforcing/filling agents such as glass fiber, carbon fiber, metal whiskers, or mineral filler. Of the total weight of the polymer composition, usually the amounts of the other above-specified components of this invention will fall in the following approximate ranges: 5 to 28 wt% of one or more organic halogen-containing flame retardant(s), 0.5 to 7 wt% of antimony oxide and/or alkali metal antimonate, 1 to 15 wt% of one or more acrylic impact modifier(s), 0 to 8 wt% of at least one olefin-based hydrocarbon polymer, 0 to 12.5 wt% of at least one of the boron-based synergists, with the provisos that:
1) at least one, and preferably both, of the acrylic impact modifier(s) and at least one of the boron-based synergists is used in forming the polymer composition, and
2) the total amount of flame retardant synergist(s) used in the polymer composition, whether or not at least one of the boron-based synergists is used with the antimony oxide and/or alkali metal antimonate synergist(s), is 3 to 13 wt%.
Other components, if used, will typically fall in the following approximate proportions based on the total weight of the polyester or polyamide composition: 0 to 2 wt% of one or more polymeric anti-dripping agents, and 0 to 15 wt% of one or more customary additives for polyesters or polyamides such as processing auxiliaries; UV, light, and heat stabilizers; antioxidants, nucleating agents, additional flame retardants, additional impact modifiers, and one or more agents for improving compatibility.

In the case of some of the preferred glass-reinforced polyester polymer compositions of this invention, desirable proportions (total proportions where more than one component of a given category is used) of the various components based on the total weight of the composition, subject to the above two provisos, are as follows:
1) Polyester resin(s) plus glass fiber reinforcement, 28 to 55 wt%;
2) Halogen-containing flame retardant(s), 6 to 20 wt%, and preferably 9 to 20 wt%;
3) Flame retardant synergist(s), 3 to 11 wt%, and preferably 5 to 11 wt%;
4) Acrylic impact modifier(s), 1 to 14 wt%, and preferably 4 to 14 wt%;
5) Olefin-based hydrocarbon polymer(s), when used, 2 to 7 wt%, and preferably 2 to 6 wt%;
6) Polymeric anti-dripping agent(s), when used, 0.2 to 1.5 wt%;
7) Other flame retardant additive(s) and/or other impact strength additive(s), 0 to 15 wt%, and preferably 0 to 10 wt%;
8) Processing, stabilizing, and/or compatibilizing additive(s), 0 to 10 wt%, and preferably 0.1 to 6 wt%.

Desirable proportions for some of the preferred glass-reinforced polyamide compositions of this invention, again based on the total weight of the composition and subject to the above two provisos, are as follows:
1) Polyamide resin(s) plus glass fiber reinforcement, 25 to 55 wt%;
2) Halogen-containing flame retardant(s), 10 to 28 wt%, and preferably 13 to 28 wt%;
3) Flame retardant synergist(s), 3 to 12 wt%, and preferably 5 to 12 wt%;
4) Acrylic impact modifier(s), 1 to 14 wt%, and preferably 4 to 14 wt%;
5) Olefin-based hydrocarbon polymer(s), when used, 1 to 8 wt%, and preferably 2 to 6 wt%;
6) Polymeric anti-dripping agent(s), when used, 0.2 to 1.5 wt%;
7) Other flame retardant additive(s) and/or other impact strength additive(s), 0 to 15 wt%, and preferably 0 to 10 wt%;
8) Processing, stabilizing, and/or compatibilizing additive(s), 0 to 10 wt%, and preferably 0.1 to 6 wt%.

When employing (I) a bromine-containing styrenic polymer flame retardant having at least 55 wt% of bromine, with (II) flame retardant synergist(s) as described above plus olefin-based hydrocarbon polymer(s), an especially desirable ratio of these components is from 1.3 to 3.0 parts by weight of (I) per each part by weight of (II), and with the ratio of components of (II) being from 0.1 to 1 part by weight of the olefin-based hydrocarbon polymer(s) per each part by weight of the synergist(s). When employing (IA) a bromine-containing styrenic polymer flame retardant having at least 55 wt% of bromine, with (IIA) a combination of antimony-based and boron-based flame retardant synergist(s) as described above without any olefin-based hydrocarbon polymer(s), an especially desirable ratio of these components is from 1.3 to 3.0 parts by weight of (IA) per each part by weight of (IIA), and with the ratio of the components of (IIA) being from 0.1 to 0.6 part by weight of antimony trioxide and/or alkali metal antimonate per each part by weight of all boron-based synergists used.

The proportions of the respective components in the additive compositions of this invention when free of any thermoplastic polyester or thermoplastic polyamide and glass reinforcement or filler, can be readily calculated from the proportions given above.

### Polyester

Thermoplastic polyesters, often referred to as polyalkylene terephthalates, are reaction products of aromatic dicarboxylic acid or reactive derivatives thereof, such as methyl esters or anhydrides, and aliphatic, cycloaliphatic, or araliphatic diols, and mixtures of such reaction products. Examples of such thermoplastic polyesters include polyethylene terephthalate, polypropylene terephthalate, polybutylene terephthalate, polycyclohexylene dimethylene terephthalate, and related copolyesters and blends, including blends of one or more thermoplastic polyesters with one or more other thermoplastic polymers such as polycarbonates, and especially aromatic polycarbonates.

Preferred thermoplastic polyesters contain at least 80% by weight and preferably at least 90% by weight, based on the dicarboxylic acid component, of terephthalic acid and at least 80% by weight and preferably at least 90% by weight, based on the diol component, of ethylene glycol, 1,3-propanediol, 1,4-butanediol or 1,4-cyclohexanedimethanol units, or a combination of at least two of these units.

In addition to terephthalic acid units, the preferred thermoplastic polyesters may contain up to 20 mole % and preferably up to 10 mole % of units of other aromatic or cycloaliphatic C₈₋₁₄ dicarboxylic acids or aliphatic C₄₋₁₂ dicarboxylic acids, such as, for example, units of phthalic acid, isophthalic acid, 2,6-naphthalene dicarboxylic acid, 4,4'-diphenyl dicarboxylic acid, succinic acid, adipic acid, sebacic acid, azelaic acid, or cyclohexane diacetic acid.

In addition to ethylene glycol and 1,4-butanediol units, the preferred thermoplastic polyesters may contain up to 20 mole % and preferably up to 10 mole % of other aliphatic C₃₋₁₂ diols or cycloaliphatic C₆₋₁₂ diols, such as, for example, units of 1,3-propanediol, 2-ethylpropane-1,3-diol, neopentyl glycol, 1,5-pentanediol, 1,6-hexanediol, 1,4-cyclohexanedimethanol, 3-ethylpentane-2,4-diol, 2-methylpentane-2,4-diol, 2,2,3-trimethylpentane-1,3-diol, 2-ethylhexane-1,3-diol, 2,2-diethylpropane-1,3-diol, 2,5-hexanediol, 2,2-bis(4-hydroxycyclohexyl)propane, 2,4-dihydroxy-1,1,3,3-tetramethylcyclobutane, 2,2-bis[4-(2-hydroxyethoxy)phenyl]propane, or 2,2-bis-[4-hydroxypropoxy)phenyl]propane.

Polyalkylene terephthalates may be branched by incorporation of relatively small quantities oftrihydric or tetrahydric alcohols or tribasic or tetrabasic carboxylic acids. In this connection see, for example, U.S. Pat. No. 3,692,744. Examples of preferred branching agents are trimesic acid, trimellitic acid, trimethylol ethane and propane and pentaerythritol.

Particularly preferred thermoplastic polyesters are those produced solely from terephthalic acid or a reactive derivative thereof such as a dialkyl ester, and ethylene glycol, 1,3-propanediol, and/or 1,4-butane diol, and mixtures of these polyalkylene terephthalates. Preferred polyalkylene terephthalate mixtures contain 1 to 50% by weight of polyethylene terephthalate and 99 to 50 wt% ofpolybutylene terephthalate. Particularly preferred mixtures contain 1 to 30 wt% of polyethylene terephthalate and 99 to 70% by weight of polybutylene terephthalate.

The polyalkylene terephthalates preferably used generally have an intrinsic viscosity of 0.4 to 1.5 dl/g, preferably 0.5 to 1.3 dl/g and more preferably 0.55 to 1.2 dl/g, as measured in phenol/o-dichlorobenzene (1:1 parts by weight) at 25°C. using an Ubbelohde viscosimeter. Polyethylene terephthalate and polybutylene terephthalate of these intrinsic viscosity ranges, and mixtures thereof, are most preferred. As is well known, polyethylene terephthalate engineering resin producers compound their products from either virgin PET (typically 0.55-0.70 IV) or reclaimed PET from industrial scrap, polyester film scrap, bottles and, rarely polyester fiber scrap.

Additional thermoplastic polyesters which may be utilized in the practice of this invention include, for example, polyetheresters, polyester-polycarbonate blends or alloys, polyester-ABS blends or alloys, polyester-MBS blends or alloys, and impact-modified thermoplastic polyesters.

Polyalkylene terephthalates may be produced by known methods. See, for example, *Encyclopedia of Polymer Science and Technology,* Vol. 11, pages 62-128, John Wiley & Sons, Inc., copyright 1969; and Kirk-Othmer, *Encyclopedia of Chemical Technology,* 4th Ed., Vol. 19, pages 609-653, John Wiley & Sons, Inc., copyright 1996.

### Polyamide

The polyamide substrate polymer can be any amorphous and/or partly crystalline, predominately aliphatic/cycloaliphatic or partially aromatic thermoplastic polyamide. Typically such materials are produced by polycondensation and/or polymerization processes from diamines which are predominately or entirely aliphatic or cycloaliphatic in structure, or which are partially or entirely aromatic in structure, and dicarboxylic acids or lactams which are predominantly or entirely aliphatic or cycloaliphatic in structure, or which are partially or entirely aromatic in structure. Typical amines used in forming polyamides include such diamines as hexamethylenediamine, tetramethylenediamine, 2,2,4- and 2,4,4-trimethylhexamethylenediamine, diaminodicyclohexylmethane (isomers), diaminodicyclohexylpropane (isomers) and isophoronediamine (isomers), and xylylenediamine. Also used as source materials are aminocarboxylic acids such as ε-aminocaproic acid, or ω-aminocarboxylic acids such as ω-aminolauric acid and ω-aminoundecanoic acid. Typically, the carboxylic acid used are aliphatic or mixed aliphatic-aromatic dicarboxylic acids having less than 50% by weight aromatic constituents such as adipic acid, 2,2,4- and 2,4,4-trimethyladipic acid, azelaic acid, sebacic acid, decanedicarboxylic acid, dodecanedicarboxylic acid, cyclohexanedicarboxylic acid, hexahydroterephthalic acid, isophthalic acid and terephthalic acid.

Copolyamides from the majority of the known monomers can also be used.

Illustrative polyamides which may be used in the practice of this invention are such polyamides as nylon 6, nylon 6,6, nylon 6,9, nylon 6,10, nylon 6,12, nylon 11, nylon 12, nylon 12,12, nylon 6/6,6 copolymer, and high temperature nylons such as nylon 4,6, and partially aromatic nylons (*e.g.*, Ixef polyarylamide PA MXD6 from Solvay, Zytel HTN from DuPont, and Amodel polyarylamide from BP-Amoco or Grivory HT or HT1 or HT2 from Ems-Chemie or Arlen polyarylamide from Mitsui). Other polyamides which may be used include Stanyl polyamide 46 from DSM, Vydyne polyamide 6/66 copolymers from Dow/Solutia, polyamide 612 (Vestamid D from Creanova), and similar polyamides. Of the various nylon polymers, nylon 6 and nylon 6,6 are the preferred substrate polymers.

This invention is also applicable to thermoplastic blends or alloys of one or more polyamides such as, for example, polyamide-polyolefin blends or alloys, polyamide-ionomer blends or alloys, polyamide-ABS blends or alloys, polyamide-EPDM blends or alloys, polyamide-polyphenylene oxide blends or alloys, or impact-modified polyamides.

Methods for producing polyamide polymers are known and described in the literature. See, for example, *Encyclopedia of Polymer Science and Technology,* Vol. 10, pages 460-482, John Wiley & Sons, Inc., copyright 1969; and Kirk-Othmer, *Encyclopedia of Chemical Technology,* 4th Ed., Vol. 19, pages 559-584, John Wiley & Sons, Inc., copyright 1996.

### Halogen-Containing Flame-Retardant

Any of a variety of suitable chlorine- or bromine-containing flame retardants can be used in the practice of this invention. Preferred chlorine-containing flame retardants are available commercially under the trade marks DECHLORANE® and DECHLORANE PLUS®. Among suitable organic bromine-containing flame retardants are decabromodiphenyl ether; decabromobiphenyl; tetradecabromodiphenoxybenzene; poly(dibromophenyleneoxide); decabromodiphenylethane and analogous compounds; ethylenebis(tetrabromophthalimide), bis(tetrabromophthalimide), and analogous compounds; brominated aromatic carbonate oligomers; brominated epoxy oligomers; pentabromobenzyl polyacrylate; octabromotrimethylphenylindane; tris(tribromophenyl)cyanurate; hexabromodiphenoxyethane; and similar known organic bromine-containing flame retardants. Also useful are combinations of bromine-containing flame retardants and chlorine-containing flame retardants, and flame retardants that contain both bromine and phosphorus in the molecule such as tris(tribromoneopentyl)phosphate. Preferred flame retardants are polybromoaromatic compounds containing at least 50% by weight of bromine, especially those which consist of carbon, hydrogen and bromine (and optionally trace amounts of chlorine resulting from solvents or other materials used in their synthesis). Particularly preferred bromine-containing flame retardants are polybromostyrenic polymers which contain at least 50 wt% of bromine, and preferably at least 58 wt% of bromine, more preferably at least 60 wt% of bromine, and even more preferably, at least 65 wt% of bromine. These can be formed either by oligomerizing or polymerizing one or a mixture of brominated styrene monomers, or by brominating a preformed polymer of one or more styrenic monomers. Such polymer or oligomer may be produced by any of the available polymerization routes such as free radical, anionic, cationic, or other mode of polymerization. The molecular weight of such polymer can be high or low and can be functionalized with reactive groups, *e.g.,* maleic anhydride groups or glycidylmethacrylate groups. Materials of this type are available in the marketplace, some of which also contain small amounts of chlorine resulting from the process used in their manufacture. A preferred flame retardant is a polybrominated polystyrene having a typical minimum bromine content of 66 wt% and which is available from Albemarle Corporation under the trade designation PYRO-CHEK® 68PB or 68PBC. Most preferred because of its outstanding effectiveness in the practice of this invention is a polybrominated polystyrene having a typical bromine content of 68.5 wt% and which is available from Albemarle Corporation under the trade designation SAYTEX® HP-7010P or HP-7010G. Other flame retardants can be included in the compositions of this invention, *e.g.,* red phosphorus; ammonium polyphosphates; organic phosphorus-containing flame retardants, such as triphenylphosphate, resorcinol bis(diphenylphosphate), or bisphenol-A bis(diphenylphosphate); phosphorus-nitrogen-based flame retardant compositions; melamine derivatives such as melamine cyanurate, melamine pyrophosphate, or melamine polyphosphate; or mineral-type flame retardants such as magnesium hydroxide or huntite/hydromagnesite, provided such other flame retardants do not materially detract from the performance of the compositions of this invention. Mixtures of two or more non-halogen-containing flame retardants, and mixtures of one or more halogen-containing flame retardants with one or more non-halogen-containing flame retardants can be used, again with the proviso that such mixtures do not materially detract from the performance of the compositions of this invention.

### Flame Retardant Synergist

The flame retardant synergists used are antimony oxide, preferably antimony trioxide (Sb₂O₃), and sodium antimonate, and optionally but preferably, one or more of zinc borate, mixed oxides of boron and zinc, alkaline earth borate (preferably calcium borate), and a mixture of alkaline earth metal oxide (preferably calcium oxide) and an oxide of boron and/or zinc borate. Barium sulfate, zinc sulfide, or any other suitable inorganic flame retardant synergist can also be included provided it does not materially interfere with the performance of the additive system employed. Antimony oxide is available from various commercial sources. Suitable antimony trioxides are available under the trade designation Blue Star RG or White Star N (Campine S.A.). Sodium antimonate (NaSbO₃) is available from Aldrich Chemical Co. or Laurel Industries Inc. Zinc borate and mixed oxides of boron and zinc can contain water of hydration, or they can be anhydrous materials. Materials of this type that are available on the open market include dodecaboron tetrazinc docosaoxide heptahydrate (4ZnO•6B₂O₃•7H₂O; FIREBRAKE® ZB or ZB Fine; Borax Ltd.); zinc borate monohydrate (4ZnO•B₂O₃•H₂O; FIREBRAKE 415; Borax Ltd.); and anhydrous zinc borate (2ZnO•3B₂O₃; FIREBRAKE 500; Borax Ltd.). FIREBRAKE 415 and 500 can be used at significantly higher processing temperatures than FIREBRAKE ZB or ZB Fine which start to loose water of hydration at about 290-300 °C. If desired, zinc sulfide can be utilized in combination with a zinc borate and/or a mixed oxide of boron and zinc. Suitable alkaline earth metal borates, some of which contain water of hydration, include calcium metaborate, calcium borate, magnesium orthoborate, magnesium metaborate, magnesium pyroborate, and strontium tetraborate, and mixtures of any two or more of these. The preferred alkaline earth metal borate is calcium metaborate. Calcium metaborate is available commercially from Alfa Aesar. A material identified as calcium borate, used in some of the Examples hereinafter, was obtained from U.S. Borax. Alkaline earth metal oxides which can be used in admixture with zinc oxides and/or zinc borate include magnesium oxide, calcium oxide, strontium oxide and barium oxide, all of which are available commercially from Alfa Aesar. Coated versions of any of the flame retardants synergists can be used, and this may further improve mechanical properties of the final formulations, apparently because of better surface wetting of the synergists and bonding within the polymer formulation.

### Acrylic Impact Modifier

Various types of suitable acrylic impact modifiers are available and can be used. Examples are core-shell type impact modifiers, consisting of a rubbery core and an acrylic shell. The rubbery core can be, *e.g.,* poly(butyl acrylate) or poly(butadiene-styrene). The shell can be poly(methyl methacrylate) (PMMA) or PMMA with a reactive group on it. Examples of such products are available from Rohm and Haas, under the trade designation Paraloid EXL, *e.g.,* Paraloid EXL3361 or EXL3300 or EXL3330 or EXL2300 or EXL2314 (based on a poly(butyl acrylate)-type core); or EXL2600 or EXL3600 or EXL6600 (which are MBS types products, based on a poly(butadiene-styrene)-type core); (the grades with a "6" as second digit are MBS-type impact modifiers). Paraloid EXL3361 is described as a "stabilized acrylic modifier, with improved colorability". It is an all-acrylic core/shell impact modifier which can be used for the impact modification of engineering plastics, like, *e.g.,* PBT, PET, PC, polyamides and a variety of other polymers as well as blends and alloys. One of the advantages of this type of impact modifiers is their well-defined rubber particle size, not influenced by processing conditions. Apparently the ability of these impact modifiers to improve CTI performance has not been known heretofore. Other examples of acrylic impact modifiers are Durastrength 400 or 400R, the latter being functionalized with a reactive group on the shell of the polymer, or Kane Ace grades from Kaneka.

### Olefin-based hydrocarbon polymer

Of the various olefin-based polymers that may be used in the practice of this invention, exceptionally good results can be achieved using a propylene-based polymer, namely a propylene homopolymer. Thus various polymers in which at least 50 percent by weight is formed from propylene are deemed especially suitable for use in this invention. Copolymers of propylene that may be used include copolymers with one or more alpha-olefins such as ethylene, 1-butene, 1-pentene, 3-methyl-1-butene, and analogous alpha-olefins. Examples of such materials include HDPE, LLDPE, LDPE, EPR, and EPDM. Preferred however are polypropylene homopolymers, especially low flow polypropylene homopolymers, *e.g.,* polymers having a melt flow index of no more than about 5 grams/10 minutes. Present indications are that best results may be achieved using low flow, high viscosity propylene polymers, especially low flow, high viscosity propylene homopolymers. One suitable material of this type is NOVOLEN® 1100H or 1106H polymer (a polypropylene homopolymer with a melt flow index of 1.8 grams/10 minutes; Targor, now Basell).

### Anti-Dripping Agent

This optional but preferred additional component is a polymeric anti-dripping agent. Although various materials are available for this use, preferred materials include fluoropolymers and ethylene/methacrylic acid copolymers. Materials of this type that are available commercially include fluoropolymers such as polytetrafluoroethylene or related materials available from DuPont under the TEFLON® trademark (*e.g.,* TEFLON T807N, and TEFLON 6C-N) and ethylene/methacrylic acid copolymers available from DuPont under the SURLYN® trademark such as SURLYN 8920 polymer.

### Silicon-containing polymer

Another optional component which can be used in preparing the compositions of this invention is a silicon-based component, namely an organic polymer of silicon such as poly(dimethylsiloxane) which polymer preferably is in the form of (a) a liquid, or (b) a masterbatch composed of the silicon polymer predispersed in a suitable carrier resin, such as a polyester, polyamide or polyolefin resin, or (c) a finely-divided solid composed of the silicon polymer absorbed onto an inorganic carrier such as fumed silica.

Thus finely-divided particles or powder of silica can be employed. Also suitable for use in forming the compositions of this invention are organic polymers of silicon, preferably a siloxane polymer such as poly(dimethylsiloxane). The siloxane polymer can be employed as a liquid. Another useful form of siloxane polymer is a composite material formed by dispersing the siloxane polymer within another organic polymer. Still anotheruseful form of the siloxane polymer is formed by absorbing the polymer on an inorganic particulate solid such as fumed silica. Suitable silicon-containing materials are available from Dow-Corning. A 50% nylon 6 masterbatch of silicone MB50-011 from Dow-Corning and silicon powder 4-7051 from Dow-Corning serve as examples of such materials. These silicon-based components provide greatly enhanced CTI ratings. However they should not be used in any situation where excellent mechanical properties of the molded article are required.

### Supplemental Impact Modifiers

As noted above, one or more impact modifiers can be used in addition to the acrylic impact modifier(s) in the practice of this invention. Suitable supplemental impact modifiers are typically functionalized polymers in which functional groups typically are grafted onto a suitable backbone polymer. Among suitable materials for such use as supplemental impact modifiers are copolymeric materials having impact modifying properties and which are available for example from:
A) Shell under the KRATON® trademark, *e.g.*, a polymer of the KRATON G Series, which according to the manufacturer is a styrene block copolymer in which the hydrogenated midblock is either poly(ethylene/butylene) or poly(ethylene/propylene); a polymer of the KRATON D Series, which according to the manufacturer are styrene block copolymers in which the midblocks are polybutadiene or polyisoprene; or a polymer of the KRATON FG Series such as KRATON FG-1901X, and KRATON FG-1921X polymers which according to the manufacturer involve maleic anhydride grafted onto a suitable backbone polymer such as a polymer of the KRATON G type;
B) from DuPont under the FUSABOND trademark (*e.g.*, FUSABOND B BA Series);
C) from Uniroyal under the trademarks POLYBOND® and ROYALTUF® (*e*.*g*., POLYBOND 1001, 1002, 1009, 3002, 3009, 3150, and 3200; and ROYALTUF 485, 490, and 372P20); and equivalent materials;
the products B) and C) being functionalized graft copolymers. Other candidate materials include EMA (ethylene-methyl acrylate) copolymers), EBA (ethylene-butyl acrylate copolymers), PP-g-MA (a graft polymer of maleic anhydride on polypropylene), PP-g-AA (a graft polymer of acrylic acid on polypropylene), and similar polymeric materials. It is contemplated that at least some of the foregoing supplemental impact modifiers may also contribute CTI-improving properties to the compositions of this invention. In selecting such other supplemental impact modifiers their ability to withstand the typical compounding and processing temperatures used for the final formulation should be sufficient to avoid thermal and/or oxidative degradation during such operations.

### Other Additive Components

Reinforcing agents or fillers will often be present in the compositions of this invention. Typical examples of reinforcing agents or fillers that can be used include glass fiber such as low-alkali E-glass, talc, mica, carbon fibers, potassium titanate fibers, glass spheres or microballoons, whiskers, wollastonite, kaolin, chalk, calcined kaolin, and similar substances. Sizing agents can be used with such reinforcing agents or fillers, if desired. Mixtures or combinations of glass fibers having different aspect ratios or different dimensions can be used. Suitable glass fibers that can be used in preparing the compositions of this invention are commercially available, with different diameters, e.g, with approximate diameters of 7 microns, 10 microns, or 14 microns. Other conventional additives, such as antioxidants, metal deactivators, UV stabilizers, pigments and dyes, processing aids, fillers, acid scavengers, thermal stabilizers, blowing agents, lubricants, nucleating agents, anti-static agents, plasticizers, and related materials, can be included in the compositions of this invention as is appropriate. The amounts of these conventional additives used will typically be as recommended by the manufacturer for obtaining the particular property enhancement for which the additive is employed.

It will be appreciated that the proportions given herein for the specified components, although typical, are nonetheless approximate, as departures from one or more of the foregoing ranges are permissible whenever deemed necessary, appropriate or desirable in any given situation in order to achieve the desired flame retardancy (*e.g.*, passing with at least a UL V-2 rating, preferably a UL V-1 rating, and most preferably a UL V-0 rating, or passing the glow wire test) and CTI value (preferably at least 400 volts), while retaining the other physical properties required for the intended use of the finished composition. Thus to achieve the optimum combination of flame retardancy, CTI value, and other properties, a few preliminary tests with the materials to be used is usually a desirable way to proceed in any given situation in which the optimum composition of a particular formulation has not already been established with the materials at hand.

### Masterbatch Compositions

Also within the scope of this invention are masterbatch compositions wherein some ( in the case of a "partial masterbatch") or all of the components, except for the substrate polyester or polyamide polymer and the glass fiber or other reinforcing/filling materials, are in suitable relative proportions but are blended either with or without a smaller amount of the substrate polymer. Thus this invention includes compositions which comprise a thermoplastic polyester polymer or a thermoplastic polyamide polymer with which has been blended an amount of the additive components of this invention in excess of the amount to be present in the final compound. Such masterbatch can then be diluted with additional substrate polymer and, if producing a reinforced or filled compound, one or more reinforcing/filling agents. Such compound, typically in the form of pellets, is then used in preparing the finished molded article.

In a preferred embodiment of this invention there is provided a masterbatch composition that is able to provide a high comparative tracking index when used in forming a glass-reinforced thermoplastic polyester or a glass-reinforced thermoplastic polyamide, such additive composition comprising (and preferably consisting of) a mixture formed from the following components:
1) at least one acrylic impact modifier described above;
2) at least one olefin-based hydrocarbon polymer described above, preferably polypropylene;
3) a zinc borate, a mixture of an alkali metal oxide and a boron oxide, an alkaline earth metal borate, and/or a mixture of an alkaline earth metal oxide and a boron oxide or a zinc borate; and
4) an antimony oxide and/or alkali metal antimonate flame retardant synergist.
Particularly preferred masterbatches of this type are those in which 2) is polypropylene, 3) is a zinc borate or a calcium borate, and 4) is antimony trioxide.

### Blending Procedures

Various known procedures can be used to prepare the blends or formulations constituting the compositions of this invention. For example the polyester or polyamide polymer and the additive components being used are preferably compounded using an extruder, most preferably a twin-screw extruder. However, other apparatus such as a Buss kneader may be found useful for such compounding. When using a twin-screw extruder to compound glass-reinforced thermoplastic polyester or thermoplastic polyamide, it is desirable to add the glass fibers at a downstream portion of the extruder in order to avoid excessive glass fiber breakage. The other additive components utilized in the practice of this invention can be added with the polymer in the initial feed port of the extruder or they can be added to the extruder further downstream. The extrudate from the extruder is typically converted into granules or pellets either by water cooling strands of the extruding polymer and subdividing the solidified strands into granules or pellets, or by subjecting the extrudate to concurrent die-faced pelletizing and water-cooling or air-cooling. The use of die-faced pelletizing is especially suitable when the thermoplastic polyester or polyamide is highly filled, e.g., as a masterbatch or concentrate.

If desired the additive compositions of this invention can be formulated as powder or granular blends of the additive components. Alternatively, the components can be melt blended together, with the inclusion, where necessary or appropriate, of some of the substrate polyester or nylon polymer in which the additive composition is to blended.

### Polymer Processing

The compounded polymers of this invention can be processed in conventional ways. For example, the compounds can be transformed into the final articles by appropriate processing techniques such as injection molding, compression molding, extrusion, or like procedures.

### Examples

The following Examples are presented for the purposes of illustration and are not to be taken as limitations on the scope of the invention. In these Examples polybutylene terephthalate (Ultradur B4520; BASF) designated in the Tables as PBT, was compounded with the specified additive components in the amounts specified using a Werner & Pfleiderer ZSK 25 twin-screw extruder. Test pieces were formed by injection molding in a Demag ERGOTech 50-200 using heated molds. All percentages in the Examples are by weight and are based on the total weight of the composition.

### EXAMPLE 1

The glass filled polyester was formed from Ultradur B4520 PBT (BASF) and Vetrotex 952 glass fibers (Vetrotex). A formulation was made from 36.6% of the PBT, 25% of the glass fiber, 15% of brominated polystyrene containing 68% bromine (SAYTEX® HP-7010P; Albemarle Corporation), 12% of Paraloid EXL 3361 acrylic impact modifier (Rohm & Haas), 5% of polypropylene homopolymer (Novolen 1100H polypropylene homopolymer having a melt flow index (at 230°C/2.16 kg) of 1.8 g/10 min.; Targor, now Basell) 6% of antimony trioxide (Blue Star RG; Campine S.A.), and 0.4% of Teflon T807N (DuPont). The twin screw extruder was operated using barrel temperature settings of 205-225-235-240-235-240-240-240-240 ° C along the different zones using screw speeds of 250 rpm with outputs of 15 kg/hr. Melt temperatures were about 290 ° C. Test pieces were formed by injection molding at barrel temperatures ranging from 250-260°C, and a mold temperature of 70 °C, and at screw speeds of 50 rpm for 0.8 mm thick UL bars, and 175 rpm for 1.6 mm thick UL bars.

### EXAMPLE 2

Example 1 was repeated except that the amount of the antimony trioxide was 4%, and the formulation additionally contained 2% of zinc borate (Firebreak ZB Fine; Borax Ltd.).

### EXAMPLE 3

Example 2 was repeated with the exception that the amounts of the antimony trioxide and zinc borate were 2% and 4%, respectively.

### EXAMPLE 4

Example 1 was repeated except that the amount of the antimony trioxide was 4%, and the formulation additionally contained 2% of calcium borate.

### EXAMPLE 5

Example 4 was repeated except that the amounts of the antimony trioxide and calcium borate were 2% and 4%, respectively.

### EXAMPLE 6

Example 1 was repeated except that the formulation contained 31.6% of the PBT, and 5% of barium sulfate (Blanc Fixe N; Sachtleben).

### EXAMPLE 7

Example 1 was repeated except that the amount of the PBT was 33.6%, the amount of the acrylic impact modifier was 10%, the amount of glass fibers was 15%, and the formulation additionally contained 15% talc (Steamic OOS; Talc de Luzenac).

### EXAMPLE 8

Example 3 was repeated except that the amount of PBT was 40.1%, the amount of the acrylic impact modifier was 6%, the amount of glass fibers was 30%, and the amount of the polypropylene was 2.5%.

### EXAMPLE 9

Example 6 was repeated except that the amount of the PBT was 35.1%, amount of glass fibers was 30%, the amount of acrylic impact modifier was 6%, and the amount of polypropylene was 2.5%.

### EXAMPLE 10

Example 9 was repeated except that the amount of the PBT was 40.1 % and the amount of the glass fibers was 25%.

### EXAMPLE 11

Example 10 was repeated except that the amount of the PBT was 33.1%, the amount of the brominated polystyrene was 18%, the amount of the antimony trioxide was 1%, and the formulation additionally contained 9% of zinc borate (Firebreak ZB Fine; Borax Ltd.).

### EXAMPLE 12

Example 11 was repeated except that the 9% of zinc borate was replaced by 9% of calcium borate.

### EXAMPLE 13

Example 10 was repeated except that the amount of the PBT was 44.85% and that instead of 6% of antimony trioxide, 2% of antimony trioxide and 4% of the zinc borate were used. In addition, in this and in all of the following examples:
1) the polypropylene used was Novolen 1106H (a new designation for Novolen 1100H);
2) the antimony oxide used was White Star N (Campine S.A.) which is a grade with less impurities than Blue Star RG; and
3) 0.25% of a stabilizer system (Stabs) was employed, which system was composed of Ethanox® 330 antioxidant (Albemarle Corporation), Irgafos® 168 stabilizer (Ciba-Geigy Corp.), and DHT-4A2 (a synthetic hydrocalcite; Kyowa Chemical Co.), in a ratio of 0.75:0.75:1 part by weight respectively.

### EXAMPLE 14

Example 13 was repeated except that the amount of the PBT was 36.35%, the amount of the polypropylene was 5%, and the amount of the acrylic impact modifier was 12%.

### EXAMPLE 15

Example 13 was repeated except that the amount of the PBT was 39.85% and the amount of the glass fibers was 30%.

### EXAMPLE 16

Example 15 was repeated except that the amount of the PBT was 36.35%, no polypropylene was used, and the amount of the acrylic impact modifier was 12%.

### EXAMPLE 17

Example 14 was repeated except that the amount of the PBT was 31.35% and the amount of the glass fibers was 30%.

### EXAMPLE 18

Example 13 was repeated except that no polypropylene was used and the amount of the glass fibers was 27.5%.

### EXAMPLE 19

Example 17 was repeated except that the amount of the PBT was 36.35%, the amount of the glass fibers was 25%, and the flame retardant was SAYTEX® BT-93W® flame retardant (ethylenebis(tetrabromophthalimide; Albemarle Corporation).

### EXAMPLE 20

Example 19 was repeated except that the flame retardant used was composed of 7.5% of SAYTEX® HP-7010P flame retardant and 7.5% of SAYTEX BT-93W® flame retardant (ethylenebis(tetrabromophthalimide; Albemarle Corporation).

### EXAMPLE 21

Example 19 was repeated except that the amount of the PBT was 41.35%, no polypropylene was used, the flame retardant was SAYTEX HP 7010P flame retardant, and the zinc borate was replaced by 4% calcium borate.

### EXAMPLE 22

Example 20 was repeated except that the amount of the PBT was 41.85%, the amount of the polypropylene was 2.5%, the amount of the acrylic impact modifier was 6%, and the flame retardant used was composed of 15% of SAYTEX HP-7010P flame retardant and 3% of NcendX P-30 flame retardant (Albemarle Corporation).

### EXAMPLE 23

Example 21 was repeated except that the amount of the PBT was 36.35%, the calcium borate was replaced by 4% of the zinc borate, and 5% of talc (Steamic OOS; Talc de Luzenac) was included in the blend.

### EXAMPLE 24

Example 23 was repeated except that the zinc borate was replaced by 9% of calcium borate and no talc was employed.

### EXAMPLE 25

Example 24 was repeated except that the amount of PBT was 34.35%, the amount of flame retardant was 18%, the amount of the antimony oxide was 1%, and the calcium borate was replaced by 9 % of zinc borate.

### EXAMPLE 26

Example 17 was repeated except that the amount of PBT was 35.25%, the amount of the glass reinforcement was 25%, the amount of the flame retardant was 16.5%, and no anti-drip agent (PTFE) was used.

### EXAMPLE 27

Example 25 was repeated except that the amount of the PBT was 31.85%, 2.5% of the polypropylene was included in the blend, and the zinc borate was replaced by 9% of calcium borate.

The makeup of each of the compositions of Examples 1-27 are summarized in Table 1. Properties of the compositions of these Examples are summarized in Table 2. The tests referred to in these Tables were as follows: UL 94 (Underwriters' Laboratories), Glow wire test (IEC 695-2-1), CTI (IEC 112-1979), HDT (ISO 75-1993), Tensile strength (ISO 527-1993), Tensile elongation (ISO 527-1993), Tensile modulus (ISO 527-1993), notched and unnotched Izod impact strength (ISO 180-1993).

In Tables 1 and 2, the following abbreviations are used:
PBT is the polybutylene terephthalate;
PP is the polypropylene;
AIM is the acrylic impact modifier;
GF is the glass fiber reinforcement;
FR is the flame retardant;
PTFE is the polytetrafluoroethylene anti-dripping agent; and
STABS is the stabilizer system.

The dashes in Table 1 indicates that the specified component was not used in the particular composition of the Example. In Table 2, the designation "NT" means that the particular composition was not tested for that particular property.

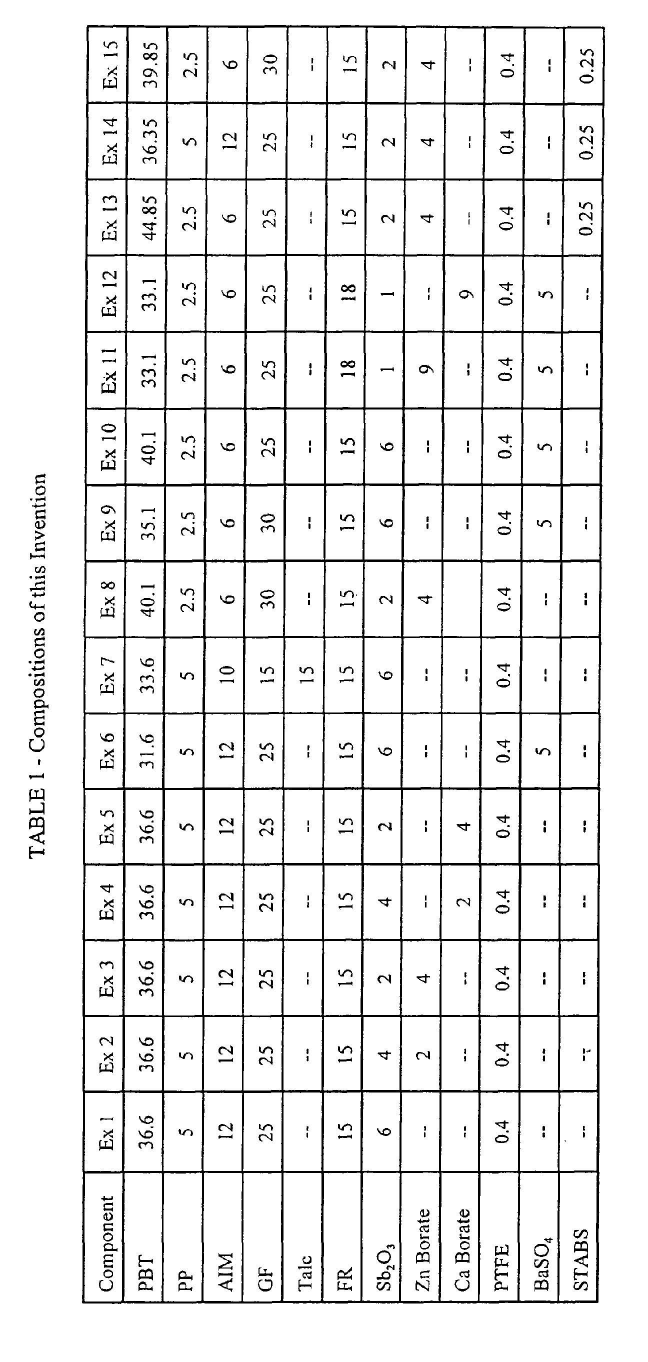

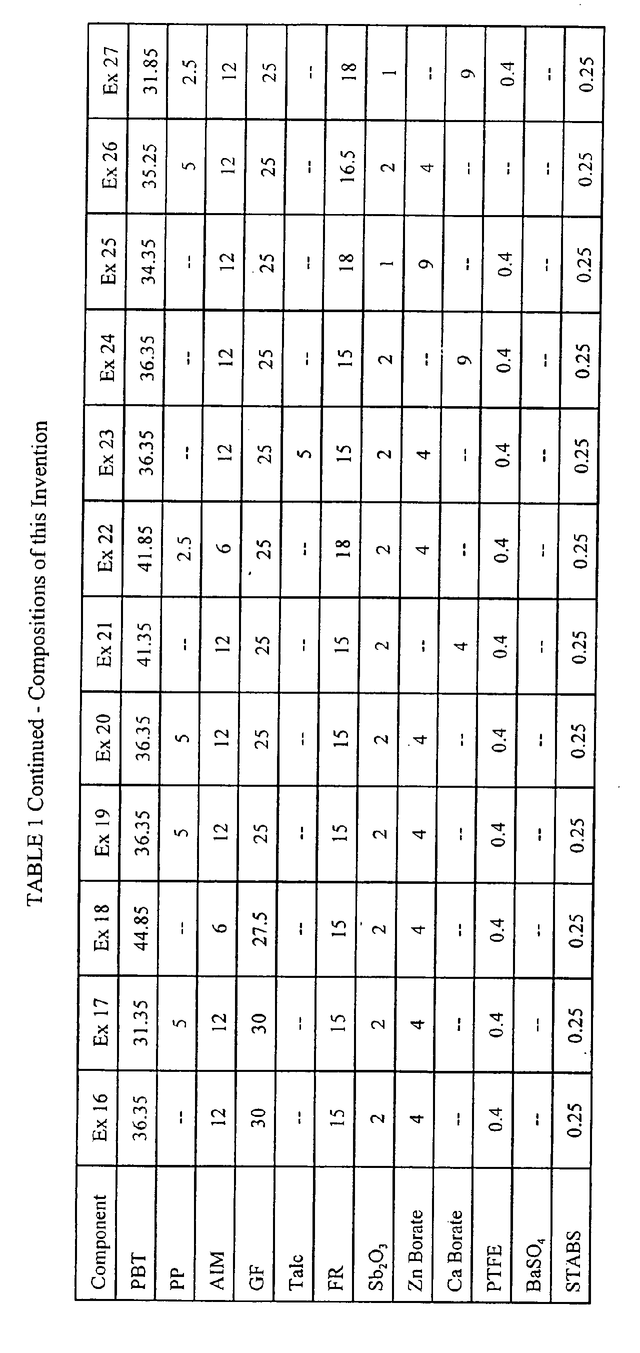

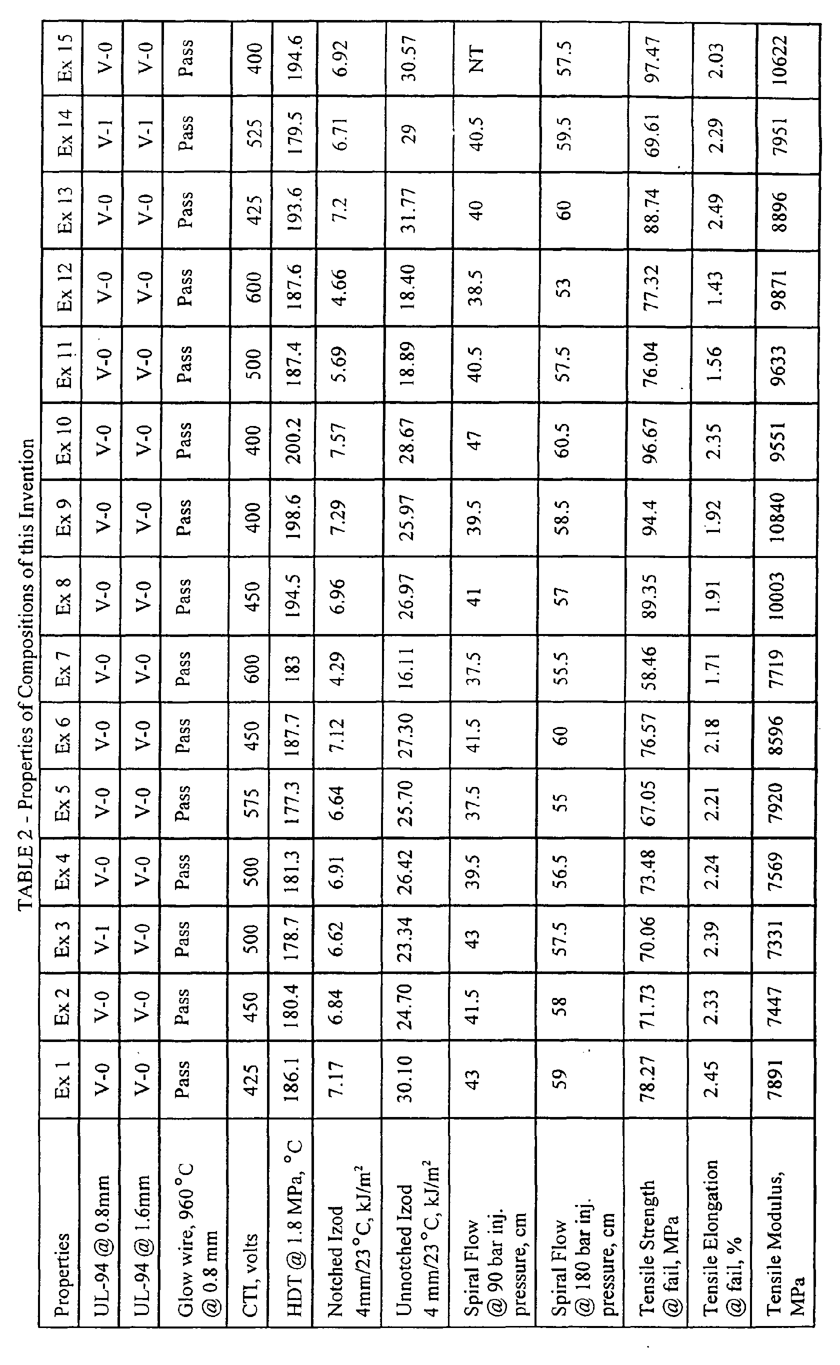

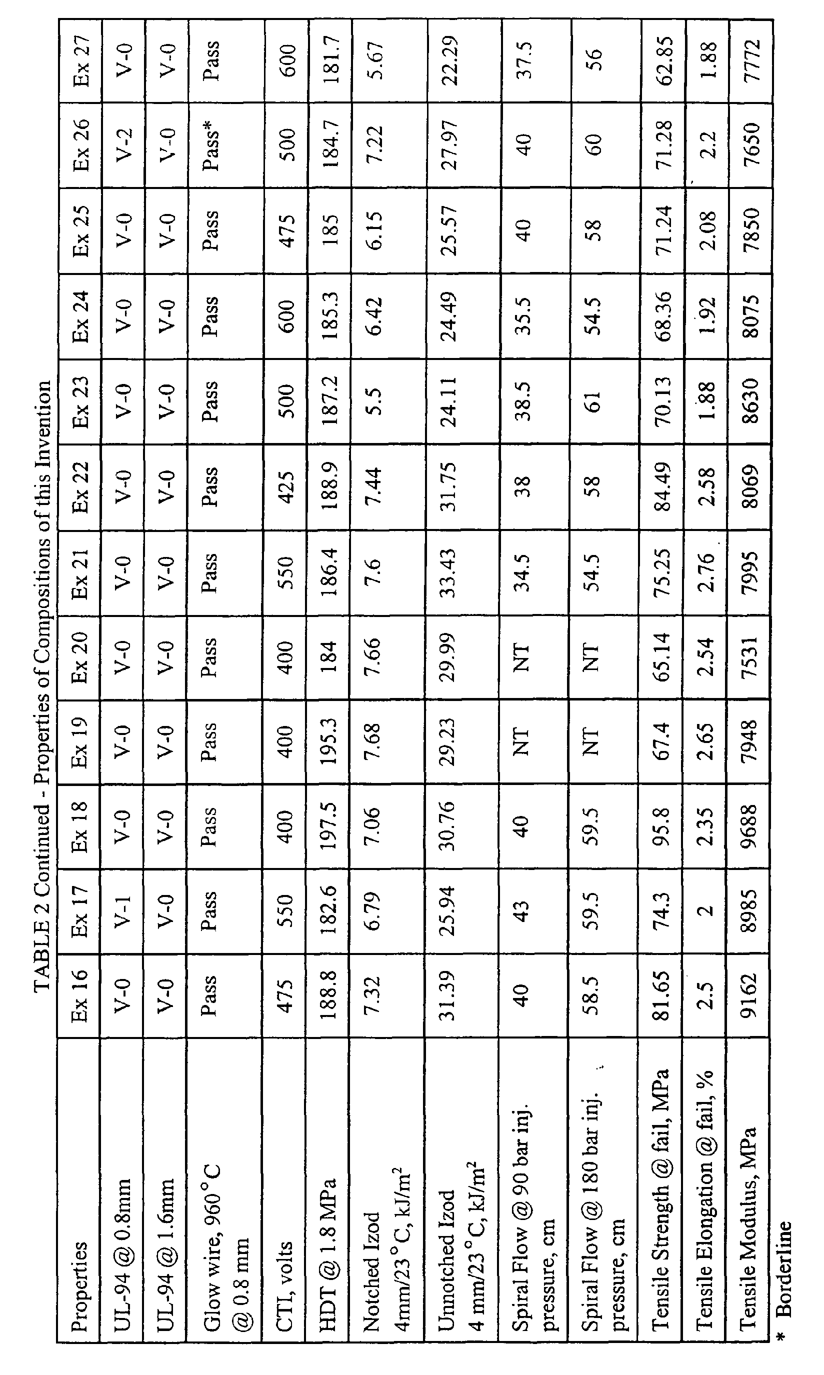

Components referred to herein by chemical name or formula, whether referred to in the singular or plural, are identified as they exist prior to coming into contact with another substance referred to by chemical name or chemical type (*e.g.*, another component, a solvent, or a polymer). Even though the claims hereinafter may refer to substances, components and/or ingredients in the present tense ("comprises", or "is"), the reference is to the substance, component or ingredient as it existed at the time just before it was first contacted, blended or mixed with one or more other substances, components and/or ingredients in accordance with the present disclosure.

While this invention has been discussed with particular reference to thermoplastic nylons and thermoplastic polyesters, it is contemplated that the principles and advantages of this invention are applicable to certain other thermoplastic polymers wherein both flame retardancy and increased comparative tracking index (CTI) of molded articles produced therefrom are desired. Such other thermoplastic polymers include syndiotactic polystyrene, syndiotactic polystyrene-polyamide, polysulfone, polyethersulfone, polyetherketone, polycarbonate, polycarbonate-ABS, polyestercarbonate, polycarbonate-polybutylene terephthalate, polyphenylsulfone, polyphenylene oxide, polyphenylene blends such as polyphenylene oxide-polystyrene, and polyphenylene oxide-high impact polystyrene, polyphenylene sulfide, thermoplastic elastomers, and similar thermoplastic polymers and blends or alloys of any of the foregoing polymers which can be processed at temperatures of 370°C or less.

## Claims

1. A molding composition which comprises a blend formed. from at least the following components:
A) a thermoplastic polyester or thermoplastic polyamide polymer;
B) glass fiber reinforcement for said polymer;
C) at least one halogen-containing flame retardant;
D) an antimony oxide and/or alkali metal antimonate flame retardant synergist; and
E) a CTI-enhancing combination of(i) at least one acrylic impact modifier, together with at least one of (ii) and (iii) wherein (ii) is at least one olefin-based hydrocarbon polymer and (iii) is a zinc borate, a mixture of an alkali metal oxide and a boron oxide, an alkaline earth metal borate, and/or a mixture of an alkaline earth metal oxide and a boron oxide or a zinc borate, or both.

2. A composition of claim 1 wherein C) is comprises at least one bromine-containing flame retardant.

3. A composition of claim 2 wherein said bromine-containing flame retardant comprises at least one polybromoaromatic compound containing at least 50% by weight of bromine.

4. A composition of claim 3 wherein said polybromoaromatic compound comprises a polybromostyrenic polymer containing at least 55% by weight of bromine or ethylenebis(tetrabromophthalimide), or both.

5. A composition of claim 3 wherein said polybromoaromatic compound is a polybromostyrenic polymer containing at least 60% by weight of bromine.

6. A composition of claim 3 wherein said polybromoaromatic compound is ethylenebis(tetrabromophthalimide).

7. A composition of any of claims 1-6 wherein D) is antimony trioxide.

8. A composition of any of claims 1-7 wherein said olefin-based hydrocarbon polymer is a propylene-based polymer.

9. A composition of claim 8 wherein said propylene-based polymer is a propylene-based homopolymer.

10. A composition of claim 9 wherein said propylene-based homopolymer has a melt flow index of not more than about 5 grams/10 minutes.

11. A composition of any of claims 1-10 wherein (iii) is a zinc·borate, a mixture of an alkali metal oxide and a boron oxide, or an alkaline earth metal borate.

12. A composition of claim 11 wherein (iii) is a zinc borate or a calcium borate.

13. A composition of any of claims 1-12 wherein the components used in forming said composition further include at least one mineral filler.

14. A composition of claim 13 wherein said filler is talc.

15. A composition of any of claims 1-14 wherein the components used in forming said composition further include at least one polymeric anti-dripping agent.

16. A composition of claim 15 wherein said anti-dripping agent comprises a polyfluoroethylene polymer.

17. A composition of claim 15 wherein said anti-dripping agent comprises an ethylene/methacrylic acid copolymer.

18. A composition of any of claims 1-17 wherein the components used in forming said composition further include barium sulfate.

19. A composition of any of claims 1-18 wherein the components used in forming said composition further include (a) an organic polymer of silicon absorbed on fumed silica, (b) an organic polymer of silicon predispersed in a polyester, polyamide, or polyolefin resin, or (c) a combination of (a) and (b) hereof.

20. A composition of claim 19 wherein the organic polymer of silicon is a polysiloxane polymer.

21. A composition of claim 20 wherein the polysiloxane polymer is a poly(dimethylsiloxane) polymer.

22. A composition of any of claims 1-21 wherein said CTI-enhancing combination is a combination of (i) and (ii) without (iii).

23. A composition of any of claims 1-21 wherein said CTI-enhancing combination is a combination of (i) and (iii) without (ii).

24. A composition of any of claims 1-21 wherein said CTI-enhancing combination is a combination of (i), (ii), and (iii).

25. A composition of any of claims 1-24 wherein A) is at least one thermoplastic polyester.

26. A composition of claim 25 wherein said thermoplastic polyester is (a) a polybutylene terephthalate polymer, (b) a polyethylene terephthalate polymer, (c) a polytrimethylene terephthalate polymer, (d) a polycyclohexylene-1,4-dimethylene terephthalate polymer, or (e) any two or more of (a), (b), (c), and (d).

27. A composition of claim 26 wherein said thermoplastic polyester is a polybutylene terephthalate polymer.

28. A composition of any of claims 1-24 wherein the components used in forming said composition further include one or more customary additives for polyesters or polyamides such as processing auxiliaries; UV, light, and heat stabilizers; antioxidants, nucleating agents, additional flame retardants, additional impact modifiers, and one or more agents for improving compatibility.

29. An article molded from a composition of any of claims 1-28.

30. A method of increasing the flame retardancy and comparative tracking index of a thermoplastic polyester or a thermoplastic polyamide, which method comprises blending with the polyester or polyamide at least the components of any of claims 1-28 to form a molding composition.

31. A method of claim 30 further comprising molding said molding composition while in molten condition.

32. The use of a composition of any of claims 1-28 to form a flame retardant molded article or shape having a high comparative tracking index.

33. An additive composition that is able to provide a flame retardant composition having a high comparative tracking index when used in forming a glass-reinforced thermoplastic polyester or a glass-reinforced thermoplastic polyamide, said additive composition comprising a mixture formed from the following components:
a) at least one halogen-containing flame retardant;
b) an antimony oxide and/or alkali metal antimonate flame retardant synergist; and
c) a CTI-enhancing combination of(i) at least one acrylic impact modifier, together with at least one of (ii) and (iii) wherein (ii) is at least one olefin-based hydrocarbon polymer and (iii) is a zinc borate, a mixture of an alkali metal oxide and a boron oxide, an alkaline earth metal borate, and/or a mixture of an alkaline earth metal oxide and a boron oxide or a zinc borate, or both.

34. A composition of claim 33 wherein a) comprises at least one bromine-containing flame retardant.

35. A composition of claim 34 wherein said bromine-containing flame retardant comprises at least one polybromoaromatic compound containing at least 50% by weight of bromine.

36. A composition of claim 35 wherein said polybromoaromatic compound is a polybromostyrenic polymer containing at least 55% by weight of bromine or ethylenebis(tetrabromophthimide), or both.

37. A composition of claim 35 wherein said polybromoaromatic compound is a polybromostyrenic polymer containing at least 60% by weight of bromine.

38. A composition of claim 35 wherein said polybromoaromatic compound is ethylenebis(tetrabromophthimide).

39. A composition of any of claims 33-38 wherein D) is antimony trioxide.

40. A composition of any of claims 33-39 wherein said olefin-based hydrocarbon polymer is a propylene-based polymer.

41. A composition of claim 40 wherein said propylene-based polymer is a propylene-based homopolymer.

42. A composition of claim 41 wherein said propylene-based homopolymer has a melt flow index of not more than about 5 grams/10 minutes.

43. A composition of any of claims 33-42 wherein (iii) is a zinc borate, a mixture of an alkali metal oxide and a boron oxide, or an alkaline earth metal borate.

44. A composition of claim 43 wherein (iii) is a zinc borate or a calcium borate.

45. A composition of any of claims 33-44 wherein the components used in forming said composition further include at least one mineral filler.

46. A composition of claim 45 wherein said filler is talc.

47. A composition of any of claims 33-46 wherein the components used in forming said composition further include at least one polymeric anti-dripping agent.

48. A composition of claim 47 wherein said anti-dripping agent comprises a polyfluoroethylene polymer.

49. A composition of claim 47 wherein said anti-dripping agent comprises an ethylene/methacrylic acid copolymer.

50. A composition of any of claims 33-49 wherein the components used in forming said composition further include barium sulfate.

51. A composition of any of claims 33-50 wherein the components used in forming said composition further include (a) an organic polymer of silicon absorbed on fumed silica, (b) an organic polymer of silicon predispersed in a polyester, polyamide, or polyolefin resin, or (c) a combination of (a) and (b) hereof.

52. A composition of claim 51 wherein the organic polymer of silicon is a polysiloxane polymer.

53. A composition of claim 52 wherein the polysiloxane polymer is a poly(dimethylsiloxane) polymer.

54. A composition of any of claims 33-53 wherein said CTI-enhancing combination is a combination of (i) and (ii) without (iii).

55. A composition of any of claims 33-53 wherein said CTI-enhancing combination is a combination of (i) and (iii) without (ii).

56. A composition of any of claims 33-53 wherein said CTI-enhancing combination is a combination of(i), (ii), and (iii).

57. A composition of any of claims 33-38 wherein the components used in forming said composition are blended separately and/or as one or more mixtures either with or without a small amount of at least one thermoplastic polyester or at least one thermoplastic polyamide to form a masterbatch.

58. A masterbatch composition that is able to provide a high comparative tracking index when used in forming a glass-reinforced thermoplastic polyester or a glass-reinforced thermoplastic polyamide, said additive composition comprising a mixture formed from the following components:
1) at least one acrylic impact modifier;
2) at least one olefin-based hydrocarbon polymer;
3) a zinc borate, a mixture of an alkali metal oxide and a boron oxide, an alkaline earth metal borate, and/or a mixture of an alkaline earth metal oxide and a boron oxide or a zinc borate; and
4) an antimony oxide and/or alkali metal antimonate flame retardant synergist.

59. A masterbatch composition of Claim 58 wherein said olefin-based hydrocarbon polymer is polypropylene.

60. A masterbatch composition of Claims 57 or 58 wherein 3) is a zinc borate or a calcium borate and wherein 4) is antimony trioxide.
